Europäisches Patentamt

European Patent Office

Office européen des brevets

(11) Veröffentlichungsnummer: **0 548 488 B1**

# EUROPÄISCHE PATENTSCHRIFT

(45) Veröffentlichungstag der Patentschrift: **22.11.95**

(51) Int. Cl.⁶: **B60T 13/66**, B60T 8/26

(21) Anmeldenummer: **92117801.8**

(22) Anmeldetag: **19.10.92**

(54) **Verfahren zur Abbremsung eines Fahrzeugs.**

(30) Priorität: **21.12.91 DE 4142670**

(43) Veröffentlichungstag der Anmeldung:
**30.06.93 Patentblatt 93/26**

(45) Bekanntmachung des Hinweises auf die
Patenterteilung:
**22.11.95 Patentblatt 95/47**

(84) Benannte Vertragsstaaten:
**DE ES FR GB IT SE**

(56) Entgegenhaltungen:
**EP-A- 0 189 077**
**EP-A- 0 288 846**
**EP-A- 0 445 575**

(73) Patentinhaber: **WABCO STANDARD GmbH**
**Euskirchener Strasse 80,**
**Postfach 18 09**
**D-53008 Bonn (DE)**

(72) Erfinder: **Rothen, Johann**
**Otto-Lilienthal-Strasse 7**
**W-3203 Sarstedt (DE)**
Erfinder: **Zobirei, Bernd**
**Brandenburger Strasse 1**
**W-3003 Ronnenberg 3 (DE)**
Erfinder: **Schult, Manfred, Dr.**
**Carl-Zuckmayer-Strasse 4**
**W-3008 Garbsen 8 (DE)**

(74) Vertreter: **Schrödter, Manfred, Dipl.-Ing.**
**WABCO Standard GmbH**
**Postfach 91 12 80**
**D-30432 Hannover (DE)**

**Beschreibung**

Die Erfindung betrifft ein Verfahren zur Abbremsung eines Fahrzeugs gemäß den Oberbegriffen der Patentansprüche 1 und 4 sowie Bremsanlagen gemäß den Oberbegriffen der Patentansprüche 6 und 7. Darin stehen die Begriffe "Vorderachsbremse" und "Hinterachsbremse" jeweils als Sammelbegriff für alle an der Bremskrafterzeugung beteiligten Bauteile im Bereich der jeweiligen Achsgruppe.

Bei der Auslegung einer Bremsanlage und der Bremsdruckverteilung zwischen den Auchsgruppen spielen die Kriterien "gleiche Kraftschlußausnutzung ($\mu$) zwischen allen Rädern und der Fahrbahnoberfläche" und "gleich großer Bremsbelagverschleiß an allen Bremsen" wichtige Rollen. Der Vorteil der gleichen Kraftschlußausnutzung ($\mu$) ist eine optimale Abbremsung bei guter Richtungsstabilität des Fahrzeugs beim Bremsen. Eine Bremsanlage, die eine solche Kraftschlußausnutzung gewährleistet, kann als "(beim Bremsen) stabilitätsoptimiert" bezeichnet werden. Eine Bremsanlage mit gleich großem Bremsbelagverschleiß an allen Bremsen kann als "verschleißoptimiert" bezeichnet werden. Die Verschleißoptimierung führt dazu, daß alle Bremsbeläge des Fahrzeugs zum gleichen Zeitpunkt ausgetauscht werden können, und bietet deshalb wirtschaftliche Vorteile.

Liegt die Auslegung der Bremsenbauteile fest, so entscheidet bei gegebener Fahrzeugmasse und Achsgruppen-Lastverteilung die Bremsdruckverteilung zwischen den Achsen darüber, ob die Bremsanlage stabilitätsoptimiert, verschleißoptimiert oder auf andere Weise betrieben wird.

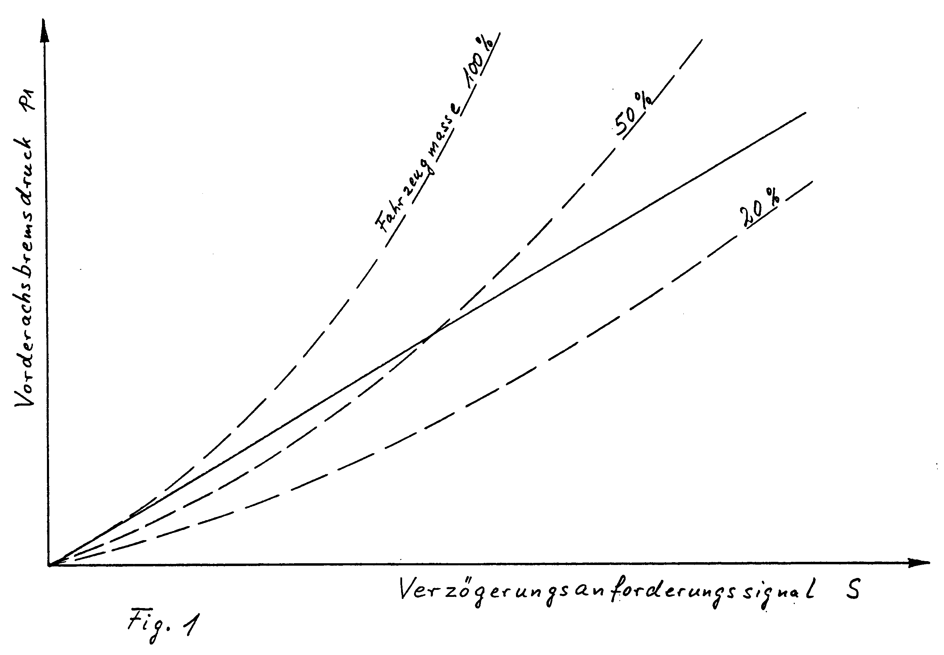

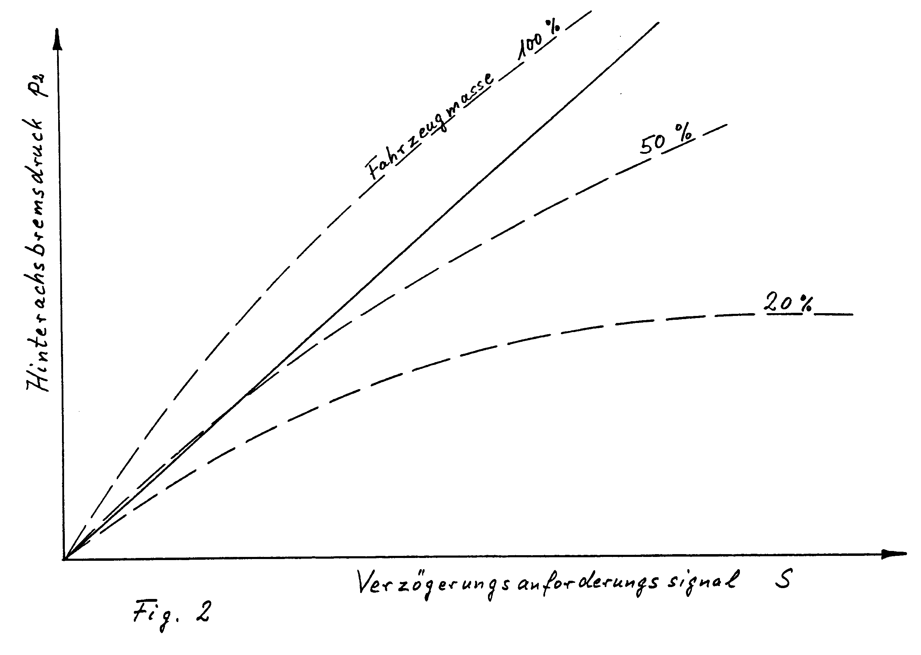

Figuren 1 und 2 zeigen schematisch ideale Kennlinien des Vorderachsbremsdrucks $p_1$ bzw. des Hinterachsbremsdrucks $p_2$ als Funktionen des Fahrzeugverzögerungsanforderungssignals für stabilitätsoptimierten Betrieb der Bremsanlage bei verschiedenen Fahrzeugmassen und für immer lastunabhängigen verschleißoptimierten Betrieb. Diese Kennlinien lassen sich in bekannter Weise mit den Auslegungsdaten der Bremsenbauteile sowie den Lastdaten und bestimmten Maßen des Fahrzeugs berechnen. Der Kennlinie für verschleißoptimierten Betrieb liegt dabei gemäß der Erfindung die Bedingung gleicher spezifischer Bremsbelagbelastung, z. B. Flächenpressung oder Energie pro Flächeneinheit, an allen Bremsen zugrunde. Die durchgezogen gezeichneten Kennlinien für verschleißoptimierten Betrieb sind Geraden, während die gestrichelt gezeichneten Kennlinien für stabilitätsoptimierten Betrieb Parabeln sind. Die unterschiedlichen Charakteristiken der Kennlinien zeigen, daß es unmöglich ist, eine Bremsanlage zugleich verschleißoptimiert und stabilitätsoptimiert auszulegen bzw. zu betreiben.

Nun ist bekannt, daß im praktischen Fahrzeugbetrieb der überwiegende Teil aller Bremsungen im Teilbremsbereich mit geringen Fahrzeugverzögerungen (bis etwa 0,3 g) und dementsprechend geringen Bremsdrücken stattfindet. Demzufolge erfolgt der Bremsbelagverschleiß hauptsächlich bei geringen Bremsdrücken.

Ein Verfahren der eingangs genannten Arten ist aus der DE 35 02 051 A1, dort insbesondere Seite 10, letzter Absatz, bekannt. In diesem Verfahren ist angeregt worden, die Bremsdruckverteilung im Teilbremsbereich, d. h. bei kleineren Verzögerungsanforderungssignalen, verschleißoptimiert vorzunehmen und sie im Bereich größerer Verzögerungsanforderungssignale auf Stabilitätsoptimierung umzustellen. Infolge des damit verbundenen Sprungs zwischen den Kennlinien läßt sich dabei eine sprunghafte Bremsdruckänderung und damit eine sprunghafte Änderung der Fahrzeugverzögerung (Ruckeln) nicht vermeiden.

Der Erfindung liegt die Aufgabe zugrunde, Verfahren der eingangs genannten Arten mit einfachen Mitteln so fortzubilden, daß sie einen sprungfreien Bremsdruckverlauf und einen sprungfreien (ruckfreien) Verlauf der Fahrzeugverzögerung gewährleisten.

Diese Aufgabe wird durch die in den Patentansprüchen 1 und 4 sowie 6 und 7 angegebene Erfindung gelöst. Vorteilhafte Ausgestaltungen und Weiterbildungen sind in den Unteransprüchen angegeben.

Die Erfindung wird im folgenden anhand zeichnerischer Darstellungen erläutert, von denen

Figur 1 schematisch ideale Kennlinien des Vorderachsbremsdrucks $p_1 = f(S)$ als Funktionen des Verzögerungsanforderungssignals,

Figur 2 schematisch entsprechende ideale Kennlinien des Hinterachsbremsdrucks $p_2 = f(S)$

und von denen unter Nennung weiterer Vorteile zeigen:

Figur 3 schematisch eine Bremsanlage eines Fahrzeugs,

Figur 4 schematisch die Seitenansicht des Fahrzeugs mit wesentlichen Parametern,

Figur 5 schematisch eine erfindungsgemäße Zielkennlinie f(S),

Figur 6 schematisch die Figur 5 zugehörige Zielkennlinie $p_2 = f(S)$,

Figur 7 schematisch eine andere erfindungsgemäße Zielkennlinie $f_2 = f(S)$,

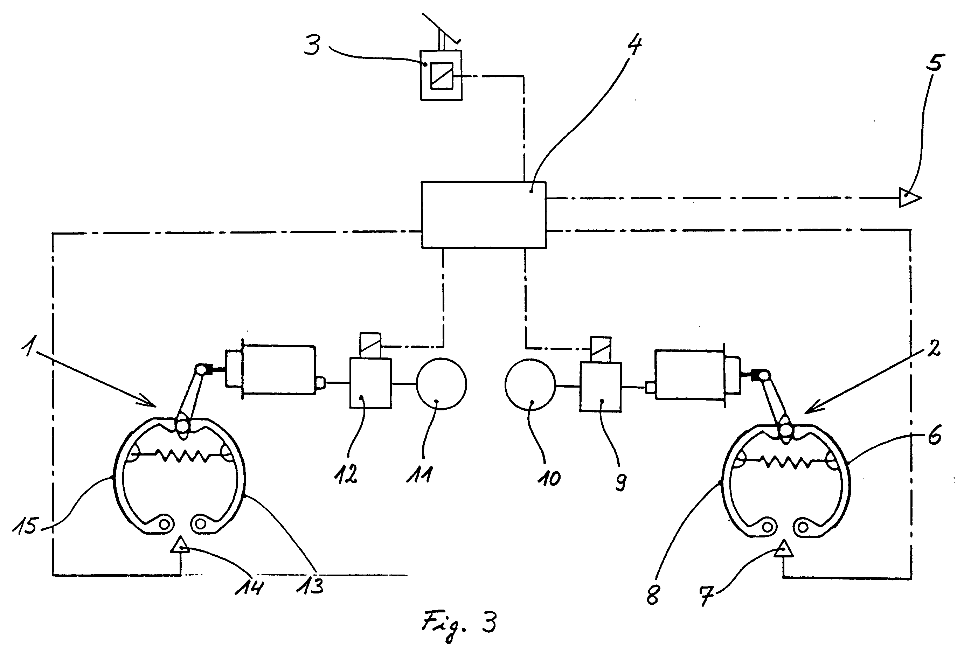

Die in Figur 3 dargestellte Bremsanlage weist eine Vorderachsbremse (1) und eine Hinterachsbremse (2) auf, welche druckbetätigt und an einer Vorderachsgruppe bzw. einer Hinterachsgruppe des Fahrzeugs angeordnet sind. Als Druckmittel kommen gasförmige (z.B. Druckluft) und hydraulische Druckmittel in Betracht. "Vorderachsgruppe" bzw. "Hinterachsgruppe" können Einzelachsen oder mehrachsige Achsaggregate sein. Die Vorderachsbremse (1) und die Hinterachsbremse (2), für die im Folgenden zur Vereinfachung auch der allgemeinere Begriff "Bremse(n)" verwendet wird, können die einzige Bremse der jeweiligen Achsgruppe sein, stehen aber in der Regel stellvertretend für mehrere, auf die Fahrzeugseiten verteilte, Bremsen der jeweiligen Achsgruppe. Die Begriffe "Vorderachsbremse", "Hinterachsbremse" und "Bremse" stehen jeweils als Sammelbegriff für alle an der Bremskrafterzeugung beteiligten Bauteile im Bereich der jeweiligen Achse. Zu diesen Bauteilen gehören beispielsweise Bremszylinder, Übertragungseinrichtungen, Bremsbacken oder Bremsklötze, Bremstrommeln oder Bremsscheiben, Bremsbeläge. Von diesen Bauteilen sind nur die Bremsbeläge (13, 15) der Vorderachsbremse (1) und (6, 8) der Hinterachsbremse (2) näher bezeichnet.

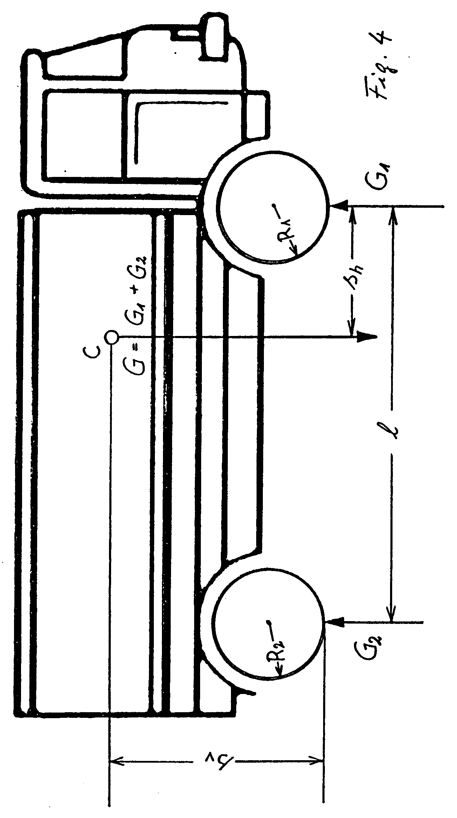

Betrachten wir nun zunächst das in Figur 4 dargestellte Fahrzeug. Auf dessen Achsgruppen wirken die Vorderachsgruppen-Last ($G_1$) bzw. die Hinterachsgruppen-Last ($G_2$). Diese Lasten werden beim stehenden und mit gleichförmiger Geschwindigkeit fahrenden Fahrzeug als "statisch" bezeichnet. Bei beschleunigter oder verzögerter Fahrt treten dynamische Achsgruppen-Last-Verlagerungen auf, als deren Ergebnis die statischen zu "dynamischen" Achsgruppen-Lasten werden. Im Schwerpunkt (C) des Fahrzeugs greift dessen Fahrzeugmasse ($G = G_1 + G_2$) an. Die horizontale Koordinate des Schwerpunkts (C), in der Figur angegeben als Abstand ($s_h$) von der (geometrischen) Mitte der Vorderachsgruppe, kann aus den statischen Achslasten ($G_1$, $G_2$) und dem Achsabstand (l) bestimmt werden. Die vertikale Koordinate des Schwerpunkts (C), in der Figur angegeben als Höhe ($s_v$) über der Fahrbahn, kann bei einer gegebenen Fahrzeugverzögerung oder -beschleunigung (a) aus der Fahrzeugmasse (G) und der dynamischen Achsgruppen-Last-Verlagerung bestimmt werden. Schließlich sind in der Figur noch die Radhalbmesser ($R_1$ und $R_2$) angegeben.

Kehren wir nun zu Fig. 3 zurück. Zur Betätigung und Steuerung der Bremsen (1, 2) enthält die Bremsanlage einen Verzögerungsanforderungssignal-Geber (3), einen elektrischen Druckmodulator (12) und einen Druckspeicher (11) für die Vorderachsbremse (1), einen elektrischen Druckmodulator (9) und einen Druckspeicher (10) für die Hinterachsbremse (2) sowie eine Steuerelektronik (4, 5, 7, 14). Die Steuerelektronik (4, 5, 7, 14) besteht aus einer Zentraleinheit (4), Lastsensoren (14 und 7) für die Vorderachsgruppen-Last ($G_1$) und die Hinterachsgruppen-Last ($G_2$) sowie einem Verzögerungssensor (5) für die Ist-Fahrzeugverzögerung.

In der Zentraleinheit (4) sind als Festwerte die Auslegungsdaten der Bremsbauteile sowie der Radstand (l) des Fahrzeugs und die Radhalbmesser ($R_1$ und $R_2$) gespeichert.

Beim Betätigen des Verzögerungs-Anforderungssignal-Gebers (3) gibt der Fahrzeugführer durch den Wert der Betätigungskraft und/oder des Betätigungswegs eine entsprechende Verzögerungsanforderung in Gestalt eines elektrischen Verzögerungsanforderungssignals aus. Die Zentraleinheit (4) empfängt als variable Werte das Verzögerungsanforderungssignal, die Lastsignale der Lastsensoren (14 und 7) sowie das Ist-Fahrzeugverzögerungssignal des Verzögerungssensors (5).

Die Zentraleinheit (4) ist so ausgebildet und programmiert, daß sie aus den eingespeicherten Festwerten und den empfangenen variablen Werten zunächst die idealen Kennlinien des Vorderachsbremsdrucks $p_1$ und des Hinterachsbremsdrucks $p_2$ als Funktionen des Verzögerungsanforderungssignals S für stabilitätsoptimierten Betrieb und sodann Zielkennlinien der Bremsdrücke ($p_1$ und $p_2$) berechnet.

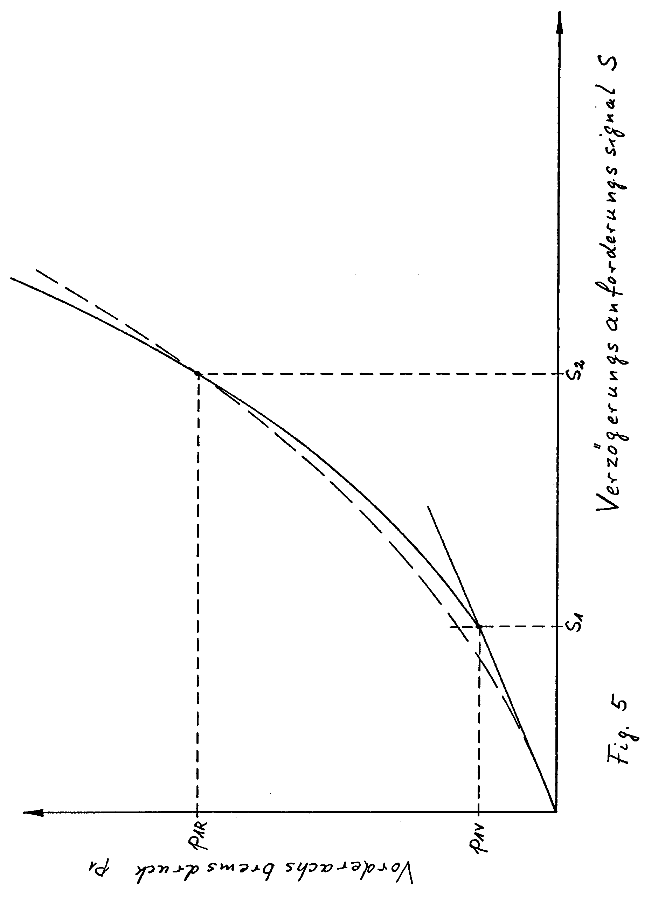

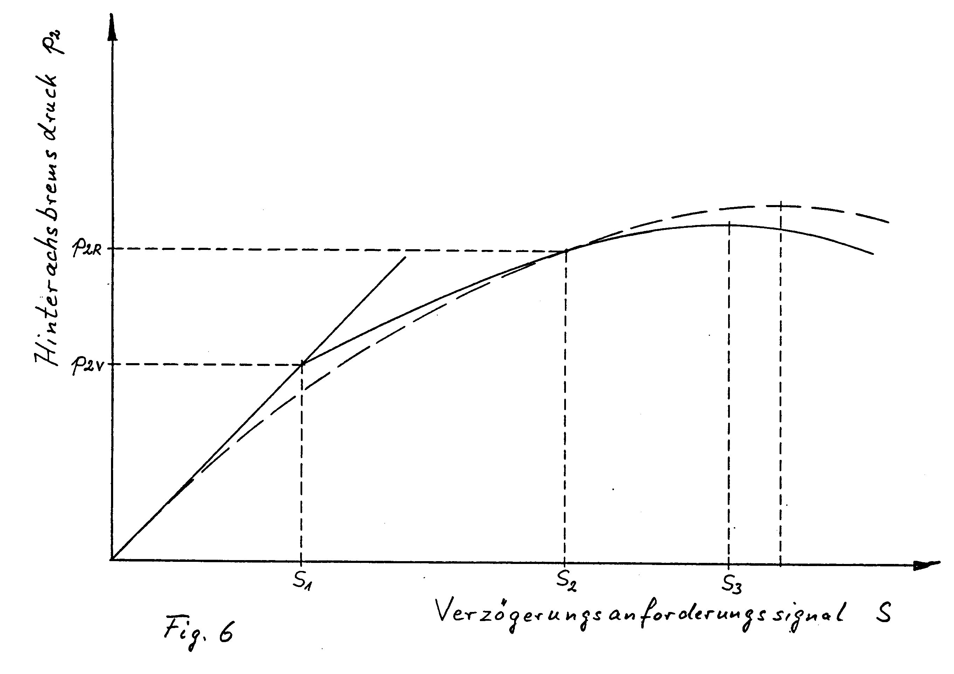

Für eine erste Ausgestaltung der Zentraleinheit (4) sind diese Kennlinien beispielhaft für das voll ausgelastete Fahrzeug, also für die Fahrzeugmasse 100 %, in den Figuren 5 und 6 dargestellt. Gestrichelt sind die idealen Kennlinien für stabilitätsoptimierten Betrieb gezeichnet. Durchgezogen sind die Zielkennlinien gezeichnet.

Jede Zielkennlinie besteht aus zwei Zielkennlinienzweigen. Der erste Zielkennlinienzweig gilt für Werte des Verzögerungsanforderungssignals (S) zwischen Null und einem vorbestimmte Umschalt-Verzögerungsanforderungssignal ($S_1$), welches beispielsweise einer Fahrzeugverzögerung von 0,3 g entsprechen kann. Dieser Kennlinienzweig ist ein Teil der jeweiligen lastunabhängigen (geraden) Kennlinie für verschleißoptimierten Betrieb. Für (kleinere) Verzögerungsanforderungssignale (S) bis zum Wert des Umschalt-Verzögerungsanforderungssignals ($S_1$) berechnet die Zentraleinheit (4) die Bremsdrücke ($p_1$ und $p_2$) also für verschleißoptimierten Betrieb. Wie aus Figur 5 hervorgeht, ist dem Endpunkt ($S_1$, $p_{1V}$) des ersten Zielkennlinienzweigs des Vorderachsbremsdrucks $p_1$ ein Vorderachsbremsdruck $p_{1V}$ zugeordnet.

Der zweite Zielkennlinienzweig gilt für höhere Werte des Fahrzeugverzögerungsanforderungssignals (S) als ($S_1$). Er wird von einer nachstehend Näherungsparabel genannten Parabel ($S_1$, $p_{1V}$; $S_2$, $p_{1R}$) gebildet, für die folgende Bedingungen gelten: Die Näherungsparabel verläuft durch den Endpunkt ($S_1$, $p_{1V}$) des ersten Zielkennlinienzweiges. Die Steigung der Näherungsparabel in diesem Punkt ist gleich der Steigung, die die ideale Kennlinie für stabilitätsoptimierten Betrieb in ihrem dem Umschalt-Verzögerungsanforderungssignal ($S_1$) zuge-

ordneten Punkt aufweist. Bei dem Wert ($S_1$) sollen also die ideale Kennlinie und die Näherungsparabel gleichgerichtet oder parallel verlaufen. Außerdem geht die Näherungsparabel durch einen Punkt ($S_2$, $p_{1R}$), der durch ein vorbestimmtes zweites Verzögerungsanforderungssignal ($S_2$) und den diesem auf der idealen Kennlinie zugeordneten Vorderachsbremsdruck ($p_{1R}$) definiert ist. Der Wert des zweiten Verzögerungsanforderungssignals ($S_2$) wird zwischen 70 % und 100 % des praktisch ausnutzbaren Wertebereichs des Verzögerungsanforderungssignals ($S$) bestimmt. Der Wert ($S_2$) kann auf spezielle Fahrzeugbedingungen und/oder spezielle Einsatzbedingungen des Fahrzeugs oder des betreffenden Fahrzeugtyps abgestimmt werden.

Wie aus Figur 6 hervorgeht, ist dem Endpunkt des ersten Zielkennlinienzweigs des Hinterachsbremsdrucks ($p_2$) ein Hinterachsbremsdruck ($p_{2v}$) zugeordnet. Auch der zweite Zielkennlinienzweig des Hinterachsbremsdrucks $p_2$ gilt für Werte des höheren Verzögerungsanforderungssignals ($S$) als ($S_1$). Er wird von einer wieder Näherungsparabel genannten Parabel ($S_1$, $p_{2v}$; $S_2$, $p_{2R}$; $S_3$) gebildet, für die folgende Bedingungen gelten: die Näherungsparabel verläuft durch den Endpunkt ($S_1$, $p_{2v}$) des ersten Zielkennlinienzweiges. Außerdem verläuft die Näherungsparabel durch einen Punkt ($S_2$, $p_{2R}$) auf der idealen Kennlinie, der durch das zweite Verzögerungsanforderungssignal ($S_2$) und den diesem zugeordneten Hinterachsbremsdruck ($p_{2R}$) der idealen Kennlinie des Hinterachsbremsdrucks für stabilitätsoptimierten Betrieb definiert ist. Ferner besitzt die Näherungsparabel bei einem vorbestimmten Wert ($S_3$) des Verzögerungsanforderungssignals ($S$) einen Scheitel.

Der Wert ($S_3$) kann auf spezielle Fahrzeugbedingungen und/oder spezielle Einsatzbedingungen des Fahrzeugs oder des betreffenden Fahrzeugtyps abgestimmt werden. Häufig wird er der Wert sein, bei dem für eine vorbestimmte Fahrzeugmasse auch die ideale Kennlinie ihren Scheitel aufweist.

In einer zweiten Ausgestaltung berechnet die Zentraleinheit (4) die Zielkennlinien des Vorderachsbremsdrucks ($p_1$) wie soeben beschrieben, die Zielkennlinien des Hinterachsbremsdrucks ($p_2$) jedoch anders.

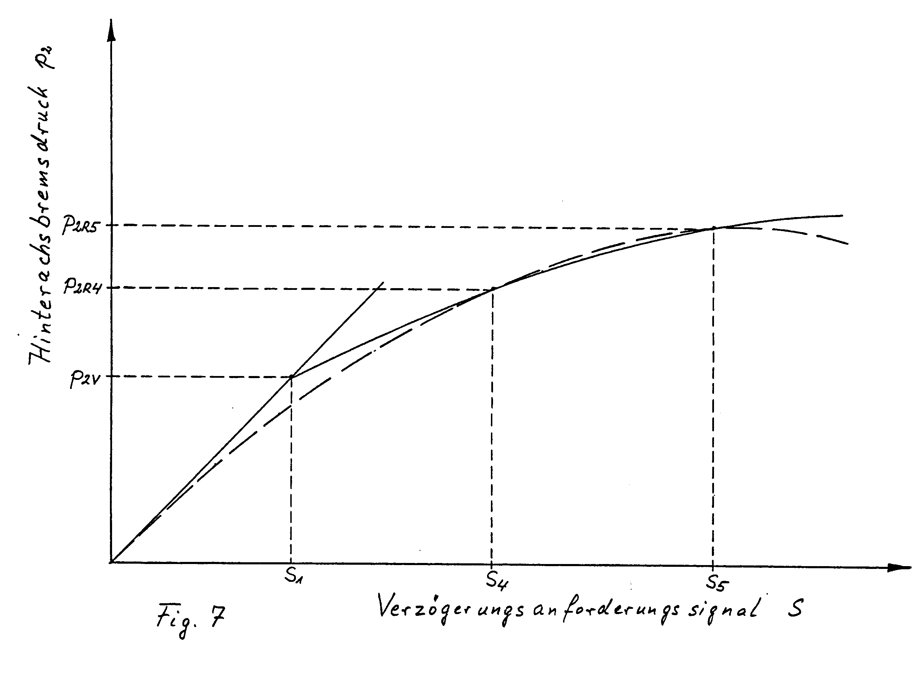

Figur 7 zeigt, wieder beispielhaft für die Fahrzeugmasse 100 %, die Kennlinien des Hinterachsbremsdrucks ($p_2$) für die zweite Ausgestaltung der Zentraleinheit (4). Für den ersten Zielkennlinienzweig bis zu dessen Endpunkt ($S_1$, $p_{2v}$) gilt das im Zusammenhang mit den Figuren 5 und 6 Gesagte. Die den zweiten Kennlinienzweig bildende Näherungsparabel verläuft auch wieder durch diesen Endpunkt. Für den weiteren Verlauf der Näherungsparabel gelten die folgenden Bedingungen: Die Näherungsparabel verläuft durch einen zweiten

Punkt ($S_4$, $p_{2R4}$), der durch ein vorbestimmtes drittes Verzögerungsanforderungssignal ($S_4$) und einen diesem zugeordneten Hinterachsbremsdruck ($p_{2R4}$) definiert ist. Bei weiter wachsendem Verzögerungsanforderungssignal ($S$) verläuft die Näherungsparabel durch einen dritten Punkt ($S_5$, $p_{2R5}$), der durch ein vorbestimmtes viertes Verzögerungsanforderungssignal ($S_5$) und einen diesem zugeordneten Hinterachsbremsdruck ($p_{2R5}$) definiert ist. Dabei liegen das dritte Verzögerungsanforderungssignal ($S_4$) und das vierte Verzögerungssignal ($S_5$) in einem Wertebereich, der Fahrzeugverzögerungen zwischen 0,4 g und 1,0 g entspricht. Außerdem sollen der zweite Punkt ($S_4$, $p_{2R4}$) und der dritte Punkt ($S_5$, $p_{2R5}$) auf der wieder gestrichelt gezeichneten idealen Kennlinie liegen.

Auch die Werte ($S_4$) und ($S_5$) können auf spezielle Fahrzeugbedingungen und/oder spezielle Einsatzbedingungen des Fahrzeugs oder des betreffenden Fahrzeugtyps abgestimmt werden. In einer Vielzahl von Fällen hat es sich als zweckmäßig gezeigt, den Wert ($S_4$) entsprechend einer Fahrzeugverzögerung zwischen 0,45 g und 0,6 g und den Wert ($S_5$) entsprechend einer Fahrzeugverzögerung zwischen 0,6 g und 1,0 g zu bestimmen.

Die Zentraleinheit (4) ist ferner so ausgebildet und programmiert, daß sie die berechneten Zielkennlinien in elektrische Steuersignale für die Druckmodulatoren (12 und 9) in Richtung Druckerhöhung umsetzt und diese an die Druckmodulatoren (12 und 9) abgibt. Bei Erhalt des ihm zugeordneten Steuersignals stellt jeder Druckmodulator (12 bzw. 9) eine Verbindung zwischen dem zugeordneten Druckspeicher (11 bzw. 10) und dem Bremszylinder der zugeordneten Bremse (1 bzw. 2) her, bis sich in letzteren der Bremsdruck ($p_1$ bzw. $p_2$) gemäß der jeweiligen Zielkennlinie aufgebaut hat, den die Zentraleinheit (4) für das gegebene Verzögerungsanforderungssignal ($S$) berechnet hat.

Die Druckmodulatoren (12 und 9) können als Wegeventile (Auf/Zu-Ventile) ausgebildet sein. In diesem Fall bildet die Zentraleinheit (4) Steuersignale mit konstantem Wert, die sie bei Erhalt einer Rückmeldung, daß der jeweilige Bremsdruck ($p_1$ bzw. $p_2$) den Wert gemäß der Zielkennlinie erreicht hat, auf Druckhalten umstellt. Zur Sicherstellung der Rückmeldung sind in diesem Fall Bremsdrucksensoren erforderlich. Diese sind nicht dargestellt, weil sie häufig in die Druckmodulatoren (12 und 9) integriert sind.

Die Druckmodulatoren (12 und 9) können auch von einer Bauart sein, die den jeweiligen Bremsdruck ($p_1$ bzw. $p_2$) nach dem Wert des zugeführten Steuersignals einstellt.

Diese Bauart wird üblicherweise "Proportionalventil" genannt, obwohl die Abhängigkeit des jeweiligen Bremsdrucks ($p_1$ bzw. $p_2$) von dem Wert des Steuersignals nicht unbedingt linear sein muß.

In diesem Fall bildet die Zentraleinheit (4) variable Steuersignale, welche sozusagen elektrische Abbilder der Bremsdrücke ($p_1$ bzw. $p_2$) gemäß der jeweiligen Zielkennlinie darstellen.

Die bisher beschriebene Grundausführung des Ausführungsbeispiels läßt sich vereinfachen. Es ist bekannt, daß bei im Einsatz befindlichen Fahrzeugen im allgemeinen reproduzierbare Zusammenhänge zwischen der jeweiligen Fahrzeugmasse, der Achsgruppen-Lastverteilung und der Schwerpunktlage bestehen. Das bedeutet, daß bei Kenntnis dieser Zusammenhänge die Messung nur einer Achsgruppen-Last zur genauen oder gut angenäherten Beschreibung der zugeordneten Fahrzeugmasse und der Schwerpunktlage genügt. Diese Erkenntnis macht sich die Vereinfachung zunutze. Zwecks dieser Vereinfachung werden die genannten Zusammenhänge in der Zentraleinheit (4) gespeichert und zur Berechnung der Kennlinien des Vorderachsbremsdrucks ($p_1$)und des Hinterachsbremsdrucks ($p_2$) herangezogen. Dann bedarf die Steuerelektronik nur noch eines Lastsensors (7 oder 14) und überhaupt keines Verzögerungssensors mehr. Die Zentraleinheit (4) ersetzt in diesem Fall die idealen Kennlinien für stabilitätsoptimierten Betrieb durch angenähert-ideale Kennlinien und setzt diese bei der Berechnung der Zielkennlinien wie die idealen Kennlinien ein. Diese Vereinfachung ist beim Einsatz des Fahrzeugs praktisch bedeutungslos, da es beim Einsatz kaum eine Rolle spielt, ob den den zweiten Zielkennlinienzweig bildenden Näherungsparabeln ($S_1$, $p_{1V}$; $S_2$, $p_{1R}$) bzw. ($S_1$, $p_{2V}$; $S_2$, $p_{2R}$; $S_3$) bzw. ($S_1$, $p_{2V}$; $S_4$, $p_{2R4}$; $S_5$, $p_{2R5}$) die ideale oder die angenähertideale Kennlinie für stabilitätsoptimierten Betrieb zugrundeliegt.

Durch die beschriebene Einstellung des Vorderachsbremsdrucks ($p_1$) und des Hinterachsbremsdrucks ($p_2$) gemäß den Zielkennlinien ermöglicht das Ausführungsbeispiel bei kleineren Verzögerungsanforderungssignalen S (bis zum Wert des Umschalt-Verzögerungsanforderungssignals $S_1$) einen verschleißoptimierten Betrieb der Bremsanlage und bei höheren Verzögerungsanforderungssignalen S in guter Annäherung einen stabilitätsoptimierten Betrieb der Bremsanlage, wobei sie einen sprungfreien Bremsdruckverlauf und einen sprungfreien (ruckfreien) Verlauf der Fahrzeugverzögerung gewährleistet.

Zur Fortbildung des Ausführungsbeispiels können die Flächen der Bremsbeläge (13, 15 und 6, 8) so bemessen sein, daß bei einer vorbestimmten Fahrzeugmasse zwischen 70 % und 100 % der zulässigen Fahrzeugmasse die Fläche des Vorderachsbremsbelags (13, 15) sich zur Fläche des Hinterachsbremsbelags (6, 8) wie die statische Vorderachsgruppen-Last ($G_1$) zur statischen Hinterachsgruppen-Last ($G_2$) verhält. Durch diese Bemessung haben die Kennlinie für verschleißoptimierten Betrieb und die der zugrundegelegten vorbestimmten Fahrzeugmasse zugeordnete ideale bzw. angenähert-ideale Kennlinie für stabilitätsoptimierten Betrieb im Kennlinienausgangspunkt die gleiche Steigung. Infolge der Gleichheit der Steigung verlaufen im Bereich kleiner Verzögerungsanforderungssignale (S) beide Kennlinien dicht nebeneinander, so daß die Bremsanlage in diesem Bereich angenähert zugleich verschleißoptimiert und ideal bzw. angenähert-ideal stabilitätsoptimiert betrieben wird. Der Bereich kleinerer Verzögerungsanforderungssignale (S) kann in diesem Zusammenhang anders zu verstehen sein als in dem weiter oben genannten Zusammenhang. Als vorbestimmte Fahrzeugmasse sollte der Bemessung der Flächen der Bremsbeläge eine solche Fahrzeugmasse zugrundegelegt werden, die beim Einsatz des Fahrzeugs häufig vorkommt und deshalb den Verlauf des Bremsbelagverschleißes maßgeblich beeinflußt. Solche Fahrzeugmassen liegen in der Regel im Bereich der zulässigen Fahrzeugmasse, so daß bevorzugt als vorbestimmte Fahrzeugmasse eine solche zwischen 70 % und 100 % der zulässigen Fahrzeugmasse in Betracht kommt. Dadurch bietet die angegebene Bemessung während erheblicher Betriebszeiten des Fahrzeugs ein zusätzlich verbessertes Verschleißverhalten bei gleichzeitiger idealer bzw. angenähert-idealer Stabilitätsoptimierung und damit hoher Fahrzeugsicherheit.

Obwohl die Darstellung in Figur 3 auf Bremsen in Trommelbauart hinweist, läßt sich die an dem Ausführungsbeispiel erläuterte Lehre auch ohne weiteres auf andere Bremsenbauarten, z. B. Scheibenbremsen, übertragen.

Der Fachmann erkennt, daß sich der Schutzbereich der vorliegenden Erfindung nicht in dem Ausführungsbeispiel mit seinen Ausgestaltungen und Fortbildungen erschöpft, sondern alle Ausgestaltungen umfaßt, deren Merkmale sich den Patentansprüchen unterordnen. Dabei sei ausdrücklich erwähnt, daß der in den Patentansprüchen verwendete Begriff "Kennlinie... für gleiche Kraftschlußausnutzung..." sowohl die vorstehend erwähnte ideale bzw. angenähert-ideale Kennlinie für stabilitätsoptimierten Betrieb" als auch jede andere angenähertideale Kennlinie für stabilitätsoptimierten Betrieb einschließen soll.

## Patentansprüche

1. Verfahren zur Abbremsung eines Fahrzeugs, welches eine Vorderachsgruppe mit wenigstens einer druckbetätigten Vorderachsbremse (1) und eine Hinterachsgruppe mit wenigstens einer druckbetätigten Hinterachsbremse (2) enthält, in welchem Verfahren der Fahrzeugführer ein Verzögerungsanforderungssignal (S) erzeugt und bis zu einem vorbestimmten Umschalt-Verzögerungsanforderungssignal($S_1$) der Vorderachsbremsdruck ($p_1$) und der Hinterachsbremsdruck ($p_2$) verschleißoptimiert eingestellt werden,

dadurch gekennzeichnet,

daß bei Verzögerungsanforderungssignalen (S) von Werten oberhalb des Umschalt-Verzögerungsanforderungssignals ($S_1$)

a) der Vorderachsbremsdruck ($p_1$) nach einer Parabel ($S_1$, $p_{1V}$; $S_2$, $p_{1R}$) eingestellt wird, welche

    aa) durch den durch das Umschalt-Verzögerungsanforderungssignal ($S_1$) und den diesem verschleißoptimiert zugeordneten Vorderachs-bremsdruck ($p_{1V}$) definierten Punkt ($S_1$, $p_{1V}$),

    ab) durch einen zweiten Punkt ($S_2$, $p_{1R}$), der durch ein vorbestimmtes zweites Verzögerungsanforderungssignal ($S_2$) und einen diesem zugeordneten Vorderachsbremsdruck ($p_{1R}$) definiert ist, wobei der Wert des zweiten Verzögerungsanforderungssignals ($S_2$) 70 % bis 100 % des praktisch ausnutzbaren Wertebereichs des Verzögerungsanforderungssignals (S) beträgt und der zweite Punkt ($S_2$, $p_{1R}$) auf der Kennlinie des Vorderachsbremsdrucks ($p_1$) für gleiche Kraftschlußausnutzung an der Vorderachsgruppe und an der Hinterachsgruppe liegt,

    verläuft und

    ac) deren Steigung in dem in aa) bezeichneten Punkt ($S_1$, $p_{1V}$) gleich der Steigung der Kennlinie des Vorderachsbremsdrucks ($p_1$) für gleiche Kraftschlußausnutzung an der Vorderachsgruppe und an der Hinterachsgruppe in ihrem dem Umschalt-Verzögerungsanforderungssignal ($S_1$) zugeordneten Punkt ist,

b) der Hinterachsbremsdruck ($p_2$) nach einer Parabel ($S_1$, $p_{2V}$, $S_2$, $p_{2R}$; $S_3$) eingestellt wird, welche

    ba) durch den durch das Umschalt-Verzögerungsanforderungssignal ($S_1$) und den diesem verschleißoptimiert zugeordneten Hinterachsbremsdruck ($p_{2V}$) definierten Punkt ($S_1$, $p_{2V}$),

    bb) durch einen zweiten Punkt ($S_2$, $p_{2R}$), der durch das zweite Verzögerungsanforderungssignal ($S_2$) und einen diesem zugeordneten Hinterachsbremsdruck ($p_{2R}$) definiert ist, wobei der zweite Punkt ($S_2$, $p_{2R}$) auf der Kennlinie des Hinterachsbremsdrucks ($p_2$) für gleiche Kraftschlußausnutzung an der Vorderachsgruppe und an der Hinterachsgruppe liegt,

    verläuft und

    bc) bei einem vorbestimmten Wert ($S_3$) des Verzögerungsanforderungssignals (S) einen Scheitel besitzt.

2. Verfahren nach Anspruch 1, dadurch gekennzeichnet, bei dem vorbestimmten Wert ($S_3$) nach Merkmal bc) die Kennlinie des Hinterachsbremsdruckes ($p_2$) für gleiche Kraftschlußausnutzung an der Vorderachsgruppe und an der Hinterachsgruppe ihren Scheitel aufweist.

3. Verfahren nach Anspruch 1, dadurch gekennzeichnet, daß der Scheitel der Parabel ($S_1$, $p_{2V}$; $S_2$, $p_{2R}$; $S_3$) des Hinterachsbremsdrucks ($p_2$) in der Umgebung des Scheitels der Kennlinie des Hinterachsbremsdrucks ($p_2$) für gleiche Kraftschlußausnutzung an der Vorderachsgruppe und an der Hinterachsgruppe liegt.

4. Verfahren zur Abbremsung eines Fahrzeugs, welches eine Vorderachsgruppe mit wenigstens einer druckbetätigten Vorderachsbremse (1) und eine Hinterachsgruppe mit wenigstens einer druckbetätigten Hinterachsbremse (2) enthält, in welchem Verfahren der Fahrzeugführer ein Verzögerungsanforderungssignal (S) erzeugt und bis zu einem vorbestimmten UmschaltVerzögerungsanforderungssignal ($S_1$) der Vorderachsbremsdruck ($p_1$) und der Hinterachsbremsdruck ($p_2$) verschleißoptimiert eingestellt werden,

dadurch gekennzeichnet,

daß bei Verzögerungsanforderungssignalen (S) von Werten oberhalb des Umschalt-Verzögerungsanforderungssignals ($S_1$)

a) der Vorderachsbremsdruck ($p_1$) nach einer Parabel ($S_1$, $p_{1V}$; $S_2$, $p_{1R}$) eingestellt wird, welche

    aa) durch den durch das Umschalt-Verzögerungsanforderungssignal ($S_1$) und den diesem verschleißoptimiert zugeordneten Vorderachs-bremsdruck ($p_{1V}$) definierten Punkt ($S_1$, $p_{1V}$),

    ab) durch einen zweiten Punkt ($S_2$, $p_{1R}$), der durch ein vorbestimmtes zweites Verzögerungs-anforderungssignal ($S_2$) und einen diesem zugeordneten Vorderachsbremsdruck ($p_{1R}$) definiert ist, wobei der Wert des zweiten Verzögerungsanforderungssignals ($S_2$) 70 % bis 100 % des praktisch ausnutzbaren Wertebereichs des Verzögerungsanforderungssignals (S) beträgt und der zweite Punkt ($S_2$, $p_{1R}$) auf der Kennlinie des Vorderachsbremsdrucks ($p_1$) für gleiche Kraftschlußausnutzung an der Vorderachsgruppe und an der Hinterachsgruppe liegt,

verläuft und

ac) deren Steigung in dem in aa) bezeichneten Punkt ($S_1$, $p_{1V}$) gleich der Steigung der Kennlinie des Vorderachsbremsdrucks ($p_1$) für gleiche Kraftschlußausnutzung an der Vorderachsgruppe und an der Hinterachsgruppe in ihrem dem Umschalt-Verzögerungsanforderungssignal ($S_1$) zugeordneten Punkt ist,

b) der Hinterachsbremsdruck ($p_2$) nach einer Parabel ($S_1$, $p_{2V}$; $S_4$, $p_{2R4}$; $S_5$, $p_{2R5}$) eingestellt wird, welche

ba) durch den durch das Umschalt-Verzögerungsanforderungssignal ($S_1$) und den diesem verschleißoptimiert zugeordneten Hinterachsbremsdruck ($p_{2V}$) definierten Punkt ($S_1$, $p_{2V}$),

bb) durch einen zweiten Punkt ($S_4$, $p_{2R}$), der durch ein vorbestimmtes drittes Verzögerungsanforderungssignal ($S_4$) und einen diesem zugeordneten Hinterachsbremsdruck ($p_{2R4}$) definiert ist,

bc) durch einen dritten Punkt ($S_5$, $p_{2R5}$), der durch ein bestimmtes viertes Verzögerungsanforderungssignal ($S_5$) und einen diesem zugeordneten Hinterachsbremsdruck ($p_{2R5}$) definiert ist, wobei das vierte Verzögerungsanforderungssignal ($S_5$) größer als das dritte Verzögerungsanforderungssignal ($S_4$) ist, verläuft, wobei der zweite Punkt ($S_4$, $p_{2R4}$) und der dritte Punkt ($S_5$, $p_{2R5}$) auf der Kennlinie des Hinterachsbremsdrucks ($p_2$) für gleiche Kraftschlußausnutzung an der Vorderachsgruppe und an der Hinterachsgruppe liegen und das dritte Verzögerungsanforderungssignal ($S_4$) sowie das vierte Verzögerungsanforderungssignal ($S_5$) Fahrzeugverzögerungen zwischen 0,4 g und 1,0 g entsprechen.

5. Verfahren nach Anspruch 4, dadurch gekennzeichnet, daß das dritte Verzögerungsanforderungssignal ($S_4$) einer Fahrzeugverzögerung zwischen 0,45 g und 0,6 g und das vierte Verzögerungsanforderungssignal ($S_5$) einer Fahrzeugverzögerung zwischen 0,6 g und 1,0 g entsprechen.

6. Bremsanlage, die einen vom Fahrer betätigten Verzögerungsanforderungssignal-Geber(3), wenigstens einen Lastsensor (7 bzw. 14), einen die Druckbeaufschlagung der Vorderachsbremse (1) kontrollierenden elektrisch gesteuerten Druckmodulator (12), einen die Druckbeaufschlagung der Hinterachsbremse (2) kontrollierenden elektrisch gesteuerten Druckmodulator (9) und eine Zentraleinheit (4), die eingangsseitig mit dem Verzögerungsanforderungssignal-Geber (3) und dem Lastsensor (7 bzw. 14) und ausgangsseitig mit den Druckmodulatoren (12 bzw. 9) verbunden ist, aufweist,

dadurch gekennzeichnet,

daß die Zentraleinheit (4) derart ausgebildet ist, daß sie

a) den der Vorderachsbremse (1) zugeordneten Druckmodulator (12) so steuert, daß dieser den Vorderachsbremsdruck ($p_1$)

aa) bei Werten des Verzögerungsanforderungssignals ($S$) bis einschließlich des Umschalt-Verzögerungsanforderungssignals ($S_1$) verschleißoptimiert

und

ab) bei Werten des Verzögerungsanforderungssignals ($S$) oberhalb des Umschalt-Verzögerungsanforderungssignals ($S_1$) nach einer Parabel ($S_1$, $p_{1V}$; $S_2$, $p_{1R}$) einstellt, welche

durch den durch das Umschalt-Verzögerungsanforderungssignal ($S_1$) und den diesem verschleißoptimiert zugeordneten Vorderachs-bremsdruck ($p_{1V}$) definierten Punkt ($S_1$, $p_{1V}$),

durch einen zweiten Punkt ($S_2$, $p_{1R}$), der durch ein vorbestimmtes zweites Verzögerungsanforderungssignal ($S_2$) und einen diesem zugeordneten Vorderachsbremsdruck ($p_{1R}$) definiert ist, wobei der Wert des zweiten Verzögerungsanforderungssignals ($S_2$) 70 % bis 100 % des praktisch ausnutzbaren Wertebereichs des Verzögerungsanforderungssignals ($S$) beträgt und der zweite Punkt ($S_2$, $p_{1R}$) auf der Kennlinie des Vorderachsbremsdrucks ($p_1$) für gleiche Kraftschlußausnutzung an der Vorderachsgruppe und an der Hinterachsgruppe liegt, verläuft und

deren Steigung in dem Punkt ($S_1$, $p_{1V}$) gleich der Steigung der Kennlinie des Vorderachsbremsdrucks ($p_1$) für gleiche Kraftschlußausnutzung an der Vorderachsgruppe und an der Hinterachsgruppe in ihrem dem Umschalt-Verzögerungsanforderungssignal ($S_1$) zugeordneten Punkt ist,

b) den der Hinterachsbremse (2) zugeordneten Druckmodulator (9) so steuert, daß dieser den Hinterachsbremsdruck ($p_2$)

ba) bei Werten des Verzögerungsanforderungssignals ($S$) bis einschließlich des Umschalt-Verzögerungsanforderungssignals ($S_1$) verschleißoptmiert

und

bb) bei Werten des Verzögerungsanforderungssignals (S) oberhalb des Umschalt-Verzögerungsanforderungssignals ($S_1$) nach einer Parabel ($S_1$, $p_2$ ; $S_2$, $p_{2R}$; $S_3$) gemäß den Merkmalen unter b) des Anspruchs 1 einstellt, welche

durch den durch das Umschalt-Verzögerungsanforderungssignal ($S_1$) und den diesem verschleißoptimiert zugeordneten Hinterachsbremsdruck ($p_{2V}$) definierten Punkt ($S_1$, $p_{2V}$),

durch einen zweiten Punkt ($S_2$, $p_{2R}$), der durch das zweite Verzögerungsanforderungssignal ($S_2$) und einen diesem zugeordneten Hinterachsbremsdruck ($p_{2R}$) definiert ist, wobei der zweite Punkt ($S_2$, $p_{2R}$) auf der Kennlinie des Hinterachsbremsdrucks ($p_2$) für gleiche Kraftschlußausnutzung an der Vorderachsgruppe und an der Hinterachsgruppe liegt, verläuft und

bei einem vorbestimmten Wert ($S_3$) des Verzögerungsanforderungssignals (S) einen Scheitel besitzt.

7. Bremsanlage, die einen vom Fahrer betätigten Verzögerungsanforderungssignal-Geber (3), wenigstens einen Lastsensor (7 bzw. 14), einen die Druckbeaufschlagung der Vorderachsbremse (1) kontrollierenden elektrisch gesteuerten Druckmodulator (12), einen die Druckbeaufschlagung der Hinterachsbremse (2) kontrollierenden elektrisch gesteuerten Druckmodulator (9) und eine Zentraleinheit (4), die eingangsseitig mit dem Verzögerungsanforderungssignal-Geber (3) und dem Lastsensor (7 bzw. 14) und ausgangsseitig mit den Druckmodulatoren (12 bzw. 9) verbunden ist, aufweist,

dadurch gekennzeichnet,

daß die Zentraleinheit (4) derart ausgebildet ist, daß sie

a) den der Vorderachsbremse (1) zugeordneten Druckmodulator (12) so steuert, daß dieser den Vorderachsbremsdruck ($p_1$)

aa) bei Werten des Verzögerungsanforderungssignals (S) bis einschließlich des Umschalt-Verzögerungssignals ($S_1$) verschleißoptimiert und

ab) bei Werten des Verzögerungsanforderungssignals (S) oberhalb des Umschalt-Verzögerungsanforderungssignals ($S_1$) nach einer Parabel ($S_1$, $p_{1V}$; $S_2$, $P_{1R}$) einstellt, welche

durch den durch das Umschalt-Verzögerungsanforderungssignal ($S_1$) und den diesem verschleißoptimiert zugeordneten Vorderachs-bremsdruck ($p_{1V}$) definierten Punkt ($S_1$, $p_{1V}$),

durch einen zweiten Punkt ($S_2$, $p_{1R}$), der durch ein vorbestimmtes zweites Verzögerungs-anforderungssignal ($S_2$) und einen diesem zugeordneten Vorderachsbremsdruck ($p_{1R}$) definiert ist, wobei der Wert des zweiten Verzögerungsanforderungssignals ($S_2$) 70 % bis 100 % des praktisch ausnutzbaren Wertebereichs des Verzögerungsanforderungssignals (S) beträgt und der zweite Punkt ($S_2$, $p_{1R}$) auf der Kennlinie des Vorderachsbremsdrucks ($p_1$) für gleiche Kraftschlußausnutzung an der Vorderachsgruppe und an der Hinterachsgruppe liegt, verläuft und

deren Steigung in dem Punkt ($S_1$, $p_{1V}$) gleich der Steigung der Kennlinie des Vorderachsbremsdrucks ($p_1$) für gleiche Kraftschlußausnutzung an der Vorderachsgruppe und an der Hinterachsgruppe in ihrem dem Umschalt-Verzögerungsanforderungssignal ($S_1$) zugeordneten Punkt ist,

b) den der Hinterachsbremse (2) zugeordneten Druckmodulator (9) so steuert, daß dieser den Hinterachsbremsdruck ($p_2$)

ba) bei Werten des Verzögerungsanforderungssignals (S) bis einschließlich des Umschalt-Verzögerungsanforderungssignals ($S_1$) verschleißoptmiert und

bb) bei Werten des Verzögerungsanforderungssignals (S) oberhalb des Umschalt-Verzögerungsanforderungssignals ($S_1$) nach einer Parabel ($S_1$, $p_2$ ; $S_4$, $p_{2R4}$; $S_5$, $P_{2R5}$) einstellt, welche

durch den durch das Umschalt-Verzögerungsanforderungssignal ($S_1$) und den diesem verschleißoptimiert zugeordneten Hinterachsbremsdruck ($p_{2V}$) definierten Punkt ($S_1$, $p_{2V}$),

durch einen zweiten Punkt ($S_4$, $p_{2R}$), der durch ein vorbestimmtes drittes Verzögerungsanforderungssignal ($S_4$) und einen diesem zugeordneten Hinterachsbremsdruck ($p_{2R4}$) definiert ist,

durch einen dritten Punkt ($S_5$, $p_{2R5}$), der durch ein bestimmtes viertes Verzögerungsanforderungssignal ($S_5$) und einen diesem zugeordneten Hinterachsbremsdruck ($p_{2R5}$) definiert ist, wobei das vierte Verzögerungsanforderungssignal ($S_5$)

größer als das dritte Verzögerungsanforderungssignal ($S_4$) ist, verläuft, wobei der zweite Punkt ($S_4$, $p_{2R4}$) und der dritte Punkt ($S_5$, $p_{2R5}$) auf der Kennlinie des Hinterachsbremsdrucks ($p_2$) für gleiche Kraftschlußausnutzung an der Vorderachsgruppe und an der Hinterachsgruppe liegen und das dritte Verzögerungsanforderungssignal ($S_4$) sowie das vierte Verzögerungsanforderungssignal ($S_5$) Fahrzeugverzögerungen zwischen 0,4 g und 1,0 g entsprechen.

8. Bremsanlage nach einem der Ansprüche 6 oder 7, die in der Vorderachsbremse (1) wenigstens einen Vorderachsbremsbelag (13, 15) und in der Hinterachsbremse (2) wenigstens einen Hinterachsbremsbelag (6, 8) enthält, dadurch gekennzeichnet, daß bei einer vorbestimmten Fahrzeugmasse (G) zwischen 70 % und 100 % der zulässigen Fahrzeugmasse die Fläche des Vorderachsbremsbelags (13, 15) sich zur Fläche des Hinterachsbremsbelags (6, 8) wie die statische Vorderachsgruppen-Last ($G_1$) zur statischen Hinterachsgruppen-Last ($G_2$) verhält.

9. Bremsanlage nach einem der Ansprüche 6 bis 8, dadurch gekennzeichnet, daß die Vorderachsgruppe eine einzelne Vorderachse ist.

10. Bremsanlage nach einem der Ansprüche 6 bis 9, dadurch gekennzeichnet, daß die Hinterachsgruppe eine einzelne Hinterachse ist.

**Claims**

1. A method for braking a vehicle, which contains a front axle group having at least one pressure-operated front axle brake (1) and rear axle group having at least one pressure-operated rear axle brake (2), in which method the vehicle driver produces a deceleration request signal ($S$) and up to a predetermined change-over deceleration request signal ($S_1$) the front axle brake pressure ($p_1$) and the rear axle brake pressure ($p_2$) are adjusted for wear-optimized operation, characterized in that on deceleration request signals ($S$) of values above the change-over deceleration request signal ($S_1$)

   a) the front axle brake pressure ($p_1$) is adjusted according to a parabola ($S_1$, $p_{1V}$; $S_2$, $p_{1R}$) which

      aa) passes through the point ($S_1$, $p_{1V}$)-defined by the change-over deceleration request signal ($S_1$) and the front axle brake pressure ($p_{1V}$) associated therewith for wear-optimized operation,

      (ab) passes through a second point ($S_2$, $p_{1R}$) which is defined by a predetermined second deceleration request signal ($S_2$) and a front axle brake pressure ($p_{1R}$) associated therewith, wherein the value of the second deceleration request signal ($S_2$) is 70 % to 100 % of the range of values of the deceleration request signal ($S$) utilizable in practice and the second point ($S_2$, $p_{1R}$) lies on the curve of the front axle brake pressure ($p_1$) for utilizing equally the frictional adhesion at the front axle group and the rear axle group, and

      ac) the gradient of which at the point ($S_1$, $p_{1V}$) denoted in aa) is the same as the gradient of the curve of the front axle brake pressure ($p_1$) for utilizing equally the frictional adhesion at the front axle group and at the rear axle group at its point associated with the change-over deceleration request signal ($S_1$),

   b) the rear axle brake ($p_2$) is adjusted according to a parabola ($S_1$, $p_{2V}$; $S_2$, $p_{2R}$, $S_3$) which

      ba) passes through the point ($S_1$, $p_{2V}$) defined by the change-over deceleration request signal ($S_1$) and the rear axle brake pressure ($p_{2V}$) associated therewith for wear-optimized operation,

      (bb) passes through a second point ($S_2$, $p_{2R}$) which is defined by the second deceleration request signal ($S_2$) and a rear axle brake pressure ($p_{2R}$) associated therewith, wherein the second point ($S_2$, $p_{2R}$) lies on the curve of the rear axle brake pressure ($p_2$) for utilizing equally the frictional adhesion at the front axle group and the rear axle group, and

      bc) has a peak at a predetermined value ($S_3$) of the deceleration request signal ($S$).

2. A method according to claim 1, characterized in that the curve of the rear axle brake pressure ($p_2$) for utilizing equally the frictional adhesion at the front axle group and at the rear axle group has its peak at the predetermined value ($S_3$) according to feature bc).

3. A method according to claim 1, characterized in that the peak of the parabola ($S_1$, $p_{2V}$; $S_2$, $p_{2R}$; $S_3$) of the rear axle brake pressure ($p_2$) lies in the vicinity of the peak of the curve of the rear axle brake pressure ($p_2$) for utilizing equally the frictional adhesion at the front axle group and at the rear axle group.

4. A method for braking a vehicle which contains a front axle group having at least one pressure-operated front axle brake (1) and rear axle group having at least one pressure-operated rear axle brake (2), in which method the vehicle driver produces a deceleration request signal ($S$) and up to a predetermined change-over deceleration request signal ($S_1$) the front axle brake pressure ($p_1$) and the rear axle brake pressure ($p_2$) are adjusted for wear-optimized operation
characterized in that
on deceleration request signals ($S$) of values above the change-over deceleration request signal ($S_1$)

a) the front axle brake pressure ($p_1$) is adjusted according to a parabola ($S_1$, $p_{1V}$; $S_2$, $p_{1R}$) which

aa) passes through the point ($S_1$, $p_{1V}$) defined by the change-over deceleration request signal ($S_1$) and the front axle brake pressure ($p_{1V}$) associated therewith for wear-optimized operation,

(ab) passes through a second point ($S_2$, $p_{1R}$) which is defined by a predetermined second deceleration request signal ($S_2$) and a front axle brake pressure ($p_{1R}$) associated therewith, wherein the value of the second deceleration request signal ($S_2$) is 70% to 100% of the range of values of the deceleration request signal ($S$) utilizable in practice and the second point ($S_2$, $p_{1R}$) lies on the curve of the front axle brake pressure ($p_1$) for utilizing equally the frictional adhesion at the front axle group and the rear axle group, and

ac) the gradient of which at the point ($S_1$, $p_{1V}$) denoted in aa) is the same as the gradient of the curve of the front axle brake pressure ($p_1$) for utilizing equally the frictional adhesion at the front axle group and at the rear axle group at its point associated with the change-over deceleration request signal ($S_1$),

b) the rear axle brake ($p_2$) is adjusted according to a parabola ($S_1$, $p_{2V}$; $S_4$, $p_{2R4}$, $S_5$, $p_{2R5}$) which

ba) passes through the point ($S_1$, $p_{2V}$) defined by the change-over deceleration request signal ($S_1$) and the rear axle brake pressure ($p_{2V}$) associated therewith for wear-optimized operation,

(bb) passes through a second point ($S_4$, $p_{2R}$) which is defined by a predetermined third deceleration request signal ($S_4$) and a rear axle brake pressure ($p_{2R4}$) associated therewith,

bc) passes through a third point ($S_5$, $p_{2R5}$) which is defined by a specific fourth deceleration request signal ($S_5$) and a rear axle brake pressure ($p_{2R5}$) associated therewith, wherein the fourth deceleration request signal ($S_5$) is larger than the third deceleration request signal ($S_4$), and wherein the second point ($S_4$, $p_{2R4}$) and the third point ($S_5$, $p_{2R5}$) lie on the curve of the rear axle brake pressure ($p_2$) for utilizing equally the frictional adhesion at the front axle group and at the rear axle group, and the third deceleration request signal ($S_4$) and the fourth deceleration request signal ($S_5$) correspond to vehicle decelerations between 0.4 g and 1.0 g.

5. A method according to claim 4, characterized in that the third deceleration request signal ($S_4$) corresponds to a vehicle deceleration between 0.45 g and 0.6 g and the fourth deceleration request signal ($S_5$) corresponds to a vehicle deceleration between 0.6 g and 1.0 g.

6. A brake system which has a driver-operated deceleration request signal generator (3), at least one load sensor (7, 14), an electrically controlled pressure modulator (12) monitoring the pressure admission to the front axle brake (1), an electrically controlled pressure modulator (9) monitoring the pressure admission to the rear axle brake (2), and a central processing unit (4) which is connected on its input side to the deceleration request signal generator (3) and the load sensor (7, 14) and on its output side is connected to the pressure modulators (12, 9),
characterized in that
the central processing unit (4) is constructed in such a manner that it

a) controls the pressure modulator (12) associated with the front axle brake (1) such that the former adjusts the front axle brake pressure ($p_1$)

aa) at values of the deceleration request signal ($S$) up to and including the change-over deceleration request signal ($S_1$) for wear-optimized operation, and

ab) at values of the deceleration request signal ($S$) above the change-over deceleration request signal ($S_1$) according to a parabola ($S_1$, $p_{1V}$; $S_2$, $p_{1R}$) which passes through the point ($S_1$, $p_{1V}$) defined by the change-over deceleration request signal ($S_1$) and the front axle brake pressure

($p_{1V}$) associated therewith for wear-optimized operation,

through a second point ($S_2$, $p_{1R}$) which is defined by a predetermined second deceleration request signal ($S_2$) and a front axle brake pressure ($p_{1R}$) associated therewith, wherein the value of the second deceleration request signal ($S_2$) is 70% to 100% of the range of values utilizable in practice of the deceleration request signal ($S$) and the second point ($S_2$, $p_{1R}$) lies on the curve of the front axle brake pressure ($p_1$) for utilizing equally the frictional adhesion at the front axle group and the rear axle group, and

the gradient of which at the point ($S_1$, $p_{1V}$) is the same as the gradient of the curve of the front axle brake pressure ($p_1$) for utilizing equally the frictional adhesion at the front axle group and at the rear axle group at its point associated with the change-over deceleration request signal ($S_1$),

b) controls the pressure modulator (9) associated with the rear axle brake (2) such that the former adjusts the rear axle brake pressure ($p_2$)

    ba) at values of the deceleration request signal ($S$) up to and including the change-over deceleration request signal ($S_1$) for wear-optimized operation, and

    bb) at values of the deceleration request signal ($S$) above the change-over deceleration request signal ($S_1$) according to a parabola ($S_1$, $p_2$; $S_2$, $p_{2R}$; $S_3$) according to the features under b) of claim 1, which parabola passes

    through the point ($S_1$, $p_{1V}$) defined by the change-over deceleration request signal ($S_1$) and the rear axle brake pressure ($p_{2V}$) associated therewith for wear-optimized operation,

    through a second point ($S_2$, $p_{2R}$) which is defined by the second deceleration request signal ($S_2$) and a rear axle brake pressure ($p_{2R}$) associated therewith, wherein the second point ($S_2$, $p_{2R}$) lies on the curve of the rear axle brake pressure ($p_2$) for utilizing equally the frictional adhesion at the front axle group and the rear axle group, and

    has a peak at a predetermined value ($S_3$) of the deceleration request signal ($S$).

7. A brake system which has a driver-operated deceleration request signal generator (3), at least one load sensor (7, 14), an electrically controlled pressure modulator (12) monitoring the pressure admission to the front axle brake (1), an electrically controlled pressure modulator (9) monitoring the pressure admission to the rear axle brake (2), and a central processing unit (4) which is connected on its input side to the deceleration request signal generator (3) and the load sensor (7, 14) and on its output side is connected to the pressure modulators (12, 9),

characterized in that

the central processing unit (4) is constructed in such a manner that it

    a) controls the pressure modulator (12) associated with the front axle brake (1) such that the former adjusts the front axle brake pressure ($p_1$)

       aa) at values of the deceleration request signal ($S$) up to and including the change-over deceleration request signal ($S_1$) for wear-optimized operation, and

       ab) at values of the deceleration request signal ($S$) above the change-over deceleration request signal ($S_1$) according to a parabola ($S_1$, $p_{1V}$; $S_2$, $p_{1R}$) which passes through

       the point ($S_1$, $p_{1V}$) defined by the change-over deceleration request signal ($S_1$) and the front axle brake pressure ($p_{1V}$) associated therewith for wear-optimized operation,

       through a second point ($S_2$, $p_{1R}$) which is defined by a predetermined second deceleration request signal ($S_2$) and a front axle brake pressure ($p_{1R}$) associated therewith, wherein the value of the second deceleration request signal ($S_2$) is 70% to 100% of the range of values of the deceleration request signal ($S$) utilizable in practice and the second point ($S_2$, $p_{1R}$) lies on the curve of the front axle brake pressure ($p_1$) for utilizing equally the frictional adhesion at the front axle group and the rear axle group, and

       the gradient of which at the point ($S_1$, $p_{1V}$) is the same as the gradient of the curve of the front axle brake pressure ($p_1$) for utilizing equally the frictional adhesion at the front axle group and at the rear axle group at its point associated with the change-over deceleration request signal ($S_1$),

    b) controls the pressure modulator (9) associated with the rear axle brake (2) such that the former adjusts the rear axle brake pres-

sure ($p_2$)

    ba) at values of the deceleration request signal ($S$) up to and including the change-over deceleration request signal ($S_1$) for wear-optimized operation, and

    bb) at values of the deceleration request signal ($S$) above the change-over deceleration request signal ($S_1$) according to a parabola ($S_1$, $p_2$; $S_4$, $p_{2R4}$; $S_5$, $p_{2R5}$) which passes

through the point ($S_1$, $p_{1V}$) defined by the change-over deceleration request signal ($S_1$) and the rear axle brake pressure ($p_{2V}$) associated therewith for wear-optimized operation,

through a second point ($S_4$, $p_{2R}$) which is defined by a predetermined third deceleration request signal ($S_4$) and a rear axle brake pressure ($p_{2R4}$) associated therewith,

through a third point ($S_5$, $p_{2R5}$) which is defined by a specific fourth deceleration request signal ($S_5$) and a rear axle brake pressure ($p_{2R5}$) associated therewith, wherein the fourth deceleration request signal ($S_5$) is larger than the third deceleration request signal ($S_4$), and wherein the second point ($S_4$, $p_{2R4}$) and the third point ($S_5$, $p_{2R5}$) lie on the curve of the rear axle brake pressure ($p_2$) for utilizing equally the frictional adhesion at the front axle group and at the rear axle group, and the third deceleration request signal ($S_4$) and the fourth deceleration request signal ($S_5$) correspond to vehicle decelerations between 0.4 g and 1.0 g.

8. A brake system according to one of claims 6 or 7, which contains in the front axle brake (1) at least one front axle brake lining (13, 15) and in the rear axle brake (2) at least one rear axle brake lining (6, 8), characterized in that, at a predetermined vehicle mass ($G$) between 70 % and 100 % of the allowable vehicle mass, the area of the front axle brake lining (13, 15) is to the area of the rear axle brake lining (6, 8) as the static front axle group load ($G_1$) is to the static rear axle group load ($G_2$).

9. A brake system according to one of claims 6 to 8, characterized in that the front axle group is a single front axle.

10. A brake system according to one of claims 6 to 9, characterized in that the rear axle group is a single rear axle.

## Revendications

1. Procédé pour le freinage d'un véhicule, lequel contient un groupe d'essieu avant avec au moins un frein d'essieu avant (1) actionné par pression et un groupe d'essieu arrière avec au moins un frein d'essieu arrière (2) actionné par pression, dans lequel procédé, le conducteur de véhicule engendre un signal d'exigence de décélération (S), et jusqu'à un signal de commutation et d'exigence de décélération ($S_1$) prédéterminé, la pression de freinage d'essieu avant ($p_1$) et la pression de freinage d'essieu arrière ($p_2$) sont ajustées optimales au point de vue usure par frottement,

    <u>caractérisé en ce</u>,

    que lors de signaux d'exigence de décélération (S) de valeurs au-dessus du signal de commutation et d'exigence de décélération ($S_1$)

    a) la pression de freinage d'essieu avant ($p_1$) est ajustée selon une parabole ($S_1$, $p_{1V}$ ; $S_2$, $p_{1R}$), laquelle s'étend

        aa) à travers le point ($S_1$, $p_{1V}$) défini par le signal de commutation et d'exigence de décélération ($S_1$) et la pression de freinage d'essieu avant ($p_{1V}$) associée à celui-ci, rendue optimale au point de vue usure par frottement,

        ab) à travers un deuxième point ($S_2$, $p_{1R}$), qui est défini par un deuxième signal d'exigence de décélération ($S_2$) prédéterminé et une pression de freinage d'essieu avant ($p_{1R}$) associée à celui-ci, la valeur du deuxième signal d'exigence de décélération ($S_2$) atteignant 70 % à 100 % de la plage de valeur pratiquement susceptible d'être exploitée du signal d'exigence de décélération (S) et le deuxième point ($S_2$, $p_{1R}$) se trouvant sur la ligne caractéristique de la pression de freinage d'essieu avant ($p_1$), pour exploitation d'adhérence égale au groupe d'essieu avant et au groupe d'essieu arrière, et

        ac) dont la pente dans le point ($S_1$, $p_{1V}$) désigné en aa) est égale à la pente de la ligne caractéristique de la pression de freinage d'essieu avant ($p_1$), pour exploitation d'adhérence égale au groupe d'essieu avant et au groupe d'essieu arrière, dans leur point associé au signal de commutation et d'exigence de décélération ($S_1$),

    b) la pression de freinage d'essieu arrière ($p_2$) est ajustée selon une parabole ($S_1$, $p_{2V}$, $S_2$, $p_{2R}$ ; $S_3$), laquelle s'étend

ba) à travers le point ($S_1$, $p_{2v}$) défini par le signal de commutation et d'exigence de décélération ($S_1$) et la pression de freinage d'essieu arrière ($p_{2v}$) associée à celui-ci, rendue optimale au point de vue usure par frottement,

bb) à travers un deuxième point ($S_2$, $p_{2R}$), qui est défini par le deuxième signal d'exigence de décélération ($S_2$) et une pression de freinage d'essieu arrière ($p_{2R}$) associée à celui-ci, le deuxième point ($S_2$, $p_{2R}$) se trouvant sur la ligne caractéristique de la pression de freinage d'essieu arrière ($p_2$), pour exploitation d'adhérence égale au groupe d'essieu avant et au groupe d'essieu arrière, et

bc) lors d'une valeur ($S_3$) prédéterminée du signal d'exigence de décélération ($S$), possède un sommet.

2. Procédé selon la revendication 1, <u>caractérisé en ce que</u>, lors de la valeur ($S_3$) prédéterminée selon la caractéristique bc), la ligne caractéristique de la pression de freinage d'essieu arrière ($p_2$) présente son sommet pour exploitation d'adhérence égale au groupe d'essieu avant et au groupe d'essieu arrière.

3. Procédé selon la revendication 1, <u>caractérisé en ce que</u> le sommet de la parabole ($S_1$, $p_{2v}$ ; $S_2$, $p_{2R}$ ; $S_3$) de la pression de freinage d'essieu arrière ($p_2$) se trouve aux alentours du sommet de la ligne caractéristique de la pression de freinage d'essieu arrière ($p_2$) pour exploitation d'adhérence égale au groupe d'essieu avant et au groupe d'essieu arrière.

4. Procédé pour le freinage d'un véhicule, lequel contient un groupe d'essieu avant avec au moins un frein d'essieu avant (1) actionné par pression et un groupe d'essieu arrière avec au moins un frein d'essieu arrière (2) actionné par pression, dans lequel procédé, le conducteur de véhicule engendre un signal d'exigence de décélération ($S$), et, jusqu'à un signal de commutation et d'exigence de décélération ($S_1$) prédéterminé, la pression de freinage d'essieu avant ($p_1$) et la pression de freinage d'essieu arrière ($p_2$) sont ajustés de façon optimale au point de vue usure par frottement, <u>caractérisé en ce</u> que, lors de signaux d'exigence de décélération ($S$) de valeurs au-dessus du signal de commutation et d'exigence de décélération ($S_1$)

a) la pression de freinage d'essieu avant ($p_1$) est ajustée selon une parabole ($S_1$, $p_{1v}$ ; $S_2$, $p_{1R}$), laquelle s'étend

aa) à travers le point ($S_1$, $p_{1v}$) défini par le signal de commutation et d'exigence de décélération ($S_1$) et la pression de freinage d'essieu avant ($p_{1v}$) associée à celui-ci, rendue optimale au point de vue usure par frottement,

ab) à travers un deuxième point ($S_2$, $p_{1R}$), qui est défini par un deuxième signal d'exigence de décélération ($S_2$) prédéterminé et une pression de freinage d'essieu avant ($p_{1R}$) associée à celui-ci, la valeur du deuxième signal d'exigence de décélération ($S_2$) atteignant 70 % à 100 % de la plage de valeur pratiquement susceptible d'être exploitée du signal d'exigence de décélération ($S$) et le deuxième point ($S_2$, $p_{1R}$) se trouvant sur la ligne caractéristique de la pression de freinage d'essieu avant ($p_1$), pour exploitation d'adhérence égale au groupe d'essieu avant et au groupe d'essieu arrière, et

ac) dont la pente dans le point ($S_1$, $p_{1v}$) désigné en aa) est égale à la pente de la ligne caractéristique de la pression de freinage d'essieu avant ($p_1$), pour exploitation d'adhérence égale au groupe d'essieu avant et au groupe d'essieu arrière, dans leur point associé au signal de commutation et d'exigence de décélération ($S_1$),

b) la pression de freinage d'essieu arrière ($p_2$) est ajustée selon une parabole ($S_1$, $p_{2v}$ ; $S_4$, $p_{2R4}$ ; $S_5$, $p_{2R5}$), laquelle s'étend

ba) à travers le point ($S_1$, $p_{2v}$) défini par le signal de commutation et d'exigence de décélération ($S_1$) et la pression de freinage d'essieu arrière ($p_{2v}$) associée à celui-ci, rendue optimale au point de vue usure par frottement,

bb) à travers un deuxième point ($S_4$, $p_{2R}$), qui est défini par un troisième signal d'exigence de décélération ($S_4$) prédéterminé et une pression de freinage d'essieu arrière ($p_{2R4}$) associée à celui-ci,

bc) à travers un troisième point ($S_5$, $p_{2R5}$), qui est défini par un quatrième signal d'exigence de décélération ($S_5$) déterminé et une pression de freinage d'essieu arrière ($p_{2R5}$) associée à celui-ci, le quatrième signal d'exigence de décélération ($S_5$) étant plus grand que le troisième signal d'exigence de décélération ($S_4$), le deuxième point ($S_4$, $p_{2R4}$) et le troisième point ($S_5$, $p_{2R5}$) se trouvant sur la ligne caractéristique de la pression de freinage d'essieu arrière ($p_2$), pour exploitation d'adhérence égale au groupe d'essieu avant et au groupe d'essieu arrière, et le troisième signal d'exigence de décélération ($S_4$), ainsi que le quatrième signal d'exigence de décélération ($S_5$), correspondant à des décélérations de véhicule entre 0,4 g et 1,0 g.

5. Procédé selon la revendication 4, caractérisé en ce que, le troisième signal d'exigence de décélération ($S_4$) correspond à une décélération de véhicule entre 0,45 g et 0,6 g et le quatrième signal d'exigence de décélération ($S_5$) correspond à une décélération de véhicule entre 0,6 g et 1,0 g.

6. Installation de freinage, qui présente : un émetteur de signal d'exigence de décélération (3) actionné par le conducteur, au moins un capteur de charge (7 ou bien 14), un modulateur de pression (12) commandé électriquement, contrôlant la sollicitation de pression du frein d'essieu avant (1), un modulateur de pression (9) commandé électriquement, contrôlant la sollicitation de pression du frein d'essieu arrière (2), et une unité centrale (4), qui est reliée, du côté entrée, avec l'émetteur de signal d'exigence de décélération (3) et le capteur de charge (7 ou bien 14) et, du côté sortie, avec les modulateurs de pression (12 ou bien 9), caractérisée en ce, que l'unité centrale (4) est constituée de telle sorte, qu'elle

a) commande ainsi le modulateur de pression (12) associé au frein d'essieu avant (1), que celui-ci ajuste la pression de freinage d'essieu avant ($p_1$)

aa) lors de valeurs du signal d'exigence de décélération (S), jusqu'à y compris du signal de commutation et d'exigence de décélération ($S_1$), de façon optimale au point de vue usure par frottement et

ab) lors de valeurs du signal d'exigence de décélération (S) au-dessus du signal de commutation et d'exigence de décéleration ($S_1$), selon une parabole ($S_1$, $p_{1V}$ ; $S_2$, $p_{1R}$), laquelle s'étend à travers le point ($S_1$, $p_{1V}$) défini par le signal de commutation et d'exigence de décélération ($S_1$) et la pression de freinage d'essieu avant ($p_{1V}$) associée à celui-ci, rendue optimale au point de vue usure par frottement, à travers un deuxième point ($S_2$, $p_{1R}$), qui est défini par un deuxième signal d'exigence de décélération ($S_2$) prédéterminé et une pression d'essieu avant

($p_{1R}$) associée à celui-ci, la valeur du deuxième signal d'exigence de décélération ($S_2$) atteignant 70 % à 100 % de la plage de valeur pratiquement susceptible d'être exploitée du signal d'exigence de décélération (S) et le deuxième point ($S_2$, $p_{1R}$) se trouvant sur la ligne caractéristique de la pression de freinage d'essieu avant ($p_1$), pour exploitation d'adhérence égale au groupe d'essieu avant et au groupe d'essieu arrière, et

dont la pente dans le point ($S_1$, $p_{1V}$) est égale à la pente de la ligne caractéristique de la pression de freinage d'essieu avant ($p_1$), pour exploitation d'adhérence égale au groupe d'essieu avant et au groupe d'essieu arrière, dans son point associé au signal de commutation et d'exigence de décélération ($S_1$),

b) commande ainsi le modulateur de pression (9) associé au frein d'essieu arrière (2), que celui-ci ajuste la pression de freinage d'essieu arrière ($p_2$)

ba) lors de valeurs du signal d'exigence de décélération (S), jusqu'à y compris du signal de commutation et d'exigence de décélération ($S_1$), de façon optimale au point de vue d'usure par frottement et

bb) lors de valeurs du signal d'exigence de décélération (S) au-dessus du signal de commutation et d'exigence de décélération ($S_1$), selon une parabole ($S_1$, $p_2$ ; $S_2$, $p_{2R}$ ; $S_3$) conforme aux caractéristiques sous b) de la revendication 1, laquelle s'étend à travers le point ($S_1$, $p_{2V}$) défini par le signal de commutation et d'exigence de décélération ($S_1$) et la pression de freinage d'essieu arrière ($p_{2V}$) associée à celui-ci, rendue optimale au point de vue d'usure par frottement, à travers un deuxième point ($S_2$, $p_{2R}$), qui est défini par le deuxième signal d'exigence de décélération ($S_2$) et une pression de freinage d'essieu arrière ($p_{2R}$) associée à celui-ci, le deuxième point ($S_2$, $p_{2R}$) se trouvant sur la ligne caractéristique de la pression de freinage d'essieu arrière ($p_2$), pour exploitation d'adhérence égale au groupe d'essieu avant et au groupe d'essieu arrière, et

lors d'une valeur ($S_3$) prédéterminée du signal d'exigence de décélération (S), possède un sommet.

**7.** Installation de freinage, qui présente : un émetteur de signal d'exigence de décélération (3) actionné par le conducteur, au moins un capteur de charge (7 ou bien 14), un modulateur de pression (12) commandé électriquement, contrôlant la sollicitation de pression du frein d'essieu avant (1), un modulateur de pression (9) commandé électriquement, contrôlant la sollicitation de pression du frein d'essieu arrière (2), et une unité centrale (4), qui est reliée, du côté entrée, avec l'émetteur de signal d'exigence de décélération (3) et le capteur de charge (7 ou bien 14), et, du côté sortie, avec les modulateurs de pression (12 ou bien 9),

<u>caractérisée en ce,</u>

que l'unité centrale (4) est constituée de telle sorte, qu'elle

a) commande ainsi le modulateur de pression (12) associé au frein d'essieu avant (1), que celui-ci ajuste la pression de freinage d'essieu avant ($p_1$)

aa) lors de valeurs du signal d'exigence de décélération (S), jusqu'à y compris du signal de commutation et d'exigence de décélération ($S_1$), de façon optimale au point de vue usure par frottement

et

ab) lors de valeurs du signal d'exigence de décélération (S) au-dessus du signal de commutation et d'exigence de décélération ($S_1$), selon une parabole ($S_1$, $p_{1V}$ ; $S_2$, $p_{1R}$),

laquelle s'étend

à travers le point ($S_1$, $p_{1V}$) défini par le signal de commutation et d'exigence de décélération ($S_1$) et la pression de freinage d'essieu avant ($p_{1V}$) associée à celui-ci, rendue optimale au point de vue usure par frottement,

à travers un deuxième point ($S_2$, $p_{1R}$), qui est défini par un deuxième signal d'exigence de décélération ($S_2$) prédéterminé et une pression d'essieu avant ($p_{1R}$) associée à celui-ci, la valeur du deuxième signal d'exigence de décélération ($S_2$) atteignant 70 % à 100 % de la plage de valeur pratiquement susceptible d'être exploitée du signal d'exigence de décélération (S) et le deuxième point ($S_2$, $p_{1R}$) se trouvant sur la ligne caractéristique de la pression de freinage d'essieu avant ($p_1$), pour exploitation d'adhérence égale au groupe d'essieu avant et au groupe d'essieu arrière,

et

dont la pente dans le point ($S_1$, $p_{1V}$) est égale à la pente de la ligne caractéristique de la pression de freinage d'essieu avant ($p_1$), pour exploitation d'adhérence égale au groupe d'essieu avant et au groupe d'essieu arrière, dans son point associe au signal de commutation et d'exigence de décélération ($S_1$),

b) commande ainsi le modulateur de pression (9) associé au frein d'essieu arrière (2), que celui-ci ajuste la pression de freinage d'essieu arrière ($p_2$)

ba) lors de valeurs du signal d'exigence de décélération (S), jusqu'à y compris du signal de commutation et d'exigence de décélération ($S_1$), de façon optimale au point de vue d'usure par frottement

et

bb) lors de valeurs du signal d'exigence de décélération (S) au-dessus du signal de commutation et d'exigence de décélération ($S_1$), selon une parabole ($S_1$, $p_2$ ; $S_4$, $p_{2R4}$ ; $S_5$, $p_{2R5}$),

laquelle s'étend

à travers le point ($S_1$, $p_{2V}$) défini par le signal de commutation et d'exigence de décélération ($S_1$) et la pression de freinage d'essieu arrière ($p_{2V}$) associée à celui-ci, rendue optimale au point de vue d'usure par frottement,

à travers un deuxième point ($S_4$, $p_{2R}$), qui est défini par un troisième signal d'exigence de décélération ($S_4$) prédéterminé et une pression de freinage d'essieu arrière ($p_{2R4}$) associée à celui-ci, et

à travers un troisième point ($S_5$, $p_{2E5}$), qui est défini par un quatrième signal d'exigence de décélération ($S_5$) déterminé et une pression de freinage d'essieu arrière ($p_{2R5}$) associée à celui-ci, le quatrième signal d'exigence de décélération ($S_5$) étant plus grand que le troisième signal d'exigence de décélération ($S_4$), le deuxième point ($S_4$, $p_{2R4}$) et le troisième point ($S_5$, $p_{2R5}$) se trouvant sur la ligne caractéristique de la pression de freinage d'essieu arrière ($p_2$), pour exploitation d'adhérence égale au groupe d'essieu avant et au groupe d'essieu arrière, et le troisième signal d'exigence de décélération ($S_4$), ainsi que le quatrième signal d'exigence de décélération ($S_5$), correspondant à des décélérations de véhicule entre 0,4 g et 1,0 g.

**8.** Installation de freinage selon une des revendications 6 ou 7, qui contient, dans le frein d'essieu avant (1), au moins une garniture de freinage d'essieu avant (13, 15), et, dans le frein d'essieu arrière (2), au moins une garniture de freinage d'essieu arrière (6, 8), <u>caractérisée en ce</u>, que, lors d'une masse de véhicule (G) prédéterminée entre 70 % et 100 % de la masse de véhicule admissible, la surface de la garniture de freinage d'essieu avant (13, 15) se comporte, par rapport à la surface de la garniture de freinage d'essieu arrière (6, 8), comme la charge de groupe d'essieu avant ($G_1$) statique, par rapport à la charge de groupe d'essieu arrière ($G_2$) statique.

9. Installation de freinage selon une des revendications 6 à 8, <u>caractérisée en ce</u>, que le groupe d'essieu avant est un essieu avant individuel.

10. Installation de freinage selon une des revendications 6 ou 9, <u>caractérisée en ce</u>, que le groupe d'essieu arrière est un essieu arrière individuel.

Fig. 1

Fig. 2

EP 0 548 488 B1

Fig. 3

Fig. 4

Verzögerungs anforderungs signal S

Vorderachs bremsdruck $P_1$

$S_2$

$S_1$

$P_{1R}$

$P_{1V}$

Fig. 5

Fig. 6

Hinterachsbremsdruck $P_2$

$P_{2R}$

$P_{2V}$

$S_1$   $S_2$   $S_3$

Verzögerungsanforderungssignal S

Fig. 7